(19) Europäisches Patentamt
European Patent Office
Office européen des brevets

(11) EP 0 895 366 A1

(12) DEMANDE DE BREVET EUROPEEN

(43) Date de publication:
03.02.1999 Bulletin 1999/05

(51) Int. Cl.⁶: **H04B 1/707**

(21) Numéro de dépôt: 98401905.9

(22) Date de dépôt: 27.07.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 31.07.1997 FR 9709795

(71) Demandeur:
ALCATEL ALSTHOM COMPAGNIE GENERALE
D'ELECTRICITE
75008 Paris (FR)

(72) Inventeur: **Marchand, Philippe**
75013 Paris (FR)

(74) Mandataire: **Feray, Valérie et al**
**COMPAGNIE FINANCIERE ALCATEL**
**Dépt. Propriété Industrielle,**
**30, avenue Kléber**
**75116 Paris (FR)**

(54) **Emetteur/récepteur à étalement de spectre**

(57)    L'invention concerne les systèmes radioélectriques mettant en oeuvre l'étalement de spectre par
multiplexage en transposition codée en fréquence et à
modulation de phase continue.

L'invention réside dans le fait que l'oscillateur à fréquence fixe qui est habituellement utilisé dans le récepteur pour fournir le signal de référence à un mélangeur
(26) est remplacé par un circuit dérivateur (40) qui prélève une partie des signaux émis et étalés en fréquence, selon des séquences binaires d'un premier
type. Les signaux reçus, en provenance d'un émetteur
éloigné qui émet des signaux étalés en fréquence selon
des séquences binaires d'un deuxième type, sont après
changement de fréquence (26), amplification (28) et
démodulation de fréquence (32), désétalés dans un circuit (32) à l'aide de séquences binaires du deuxième
type, ce qui permet de discriminer les signaux binaires
utiles provenant de l'émetteur éloigné à l'aide d'un
démodulateur numérique 42.

L'invention est applicable aux émetteurs/récepteurs de
faisceaux hertziens.

FIG.2

EP 0 895 366 A1

**Description**

L'invention concerne les systèmes radioélectriques mettant en oeuvre l'étalement de spectre par multiplexage par transposition codée en fréquence et, plus particulièrement dans de tels systèmes radioélectriques, un émetteur/récepteur de signaux à étalement de spectre par ce type de multiplexage dont la modulation de fréquence s'effectue en modulation de phase continue.

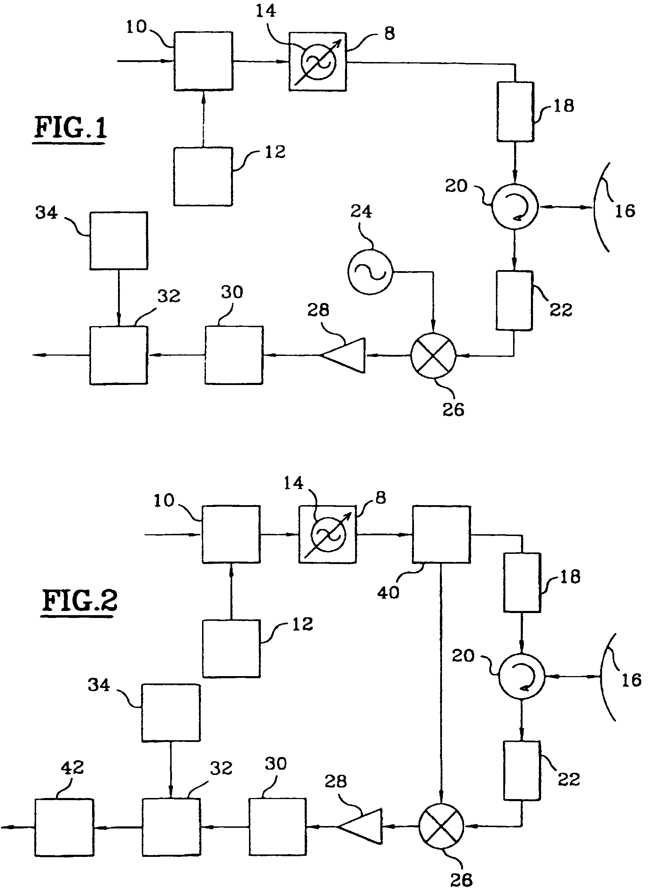

De tels systèmes radioélectriques sont mis en oeuvre dans le domaine des faisceaux hertziens et la figure 1 est un schéma simplifié d'un émetteur/récepteur de faisceau hertzien auquel s'applique l'invention. Il comprend un circuit 10 de transposition binaire des signaux utiles sous forme binaire. Plus précisément, le circuit 10 reçoit sur une de ces deux entrées les signaux utiles binaires à transmettre et sur l'autre entrée des séquences de codage de ces signaux fournis par un générateur 12. Les signaux binaires de sortie du circuit 10 sont appliqués à un modulateur de fréquence 8 constitué d'un oscillateur local 14 à commande en tension qui fonctionne à deux fréquences porteuses f1 et f2, le passage de l'une à l'autre s'effectuant de manière continue sans saut de phase. Les signaux de sortie de l'oscillateur 14 sont appliqués à une antenne d'émission/réception 16 par l'intermédiaire d'un filtre 18 et d'un circulateur 20.

A la réception, les signaux reçus par l'antenne 16 sont appliqués à une entrée d'un mélangeur de fréquence 26 par l'intermédiaire du circulateur 20 et d'un filtre 22. Le mélangeur de fréquence a une deuxième entrée à laquelle est appliquée un signal fourni par un oscillateur à fréquence fixe 24. Les signaux à fréquence intermédiaire fournis par le mélangeur de fréquence 26 sont, après amplification et filtrage dans un circuit 28, démodulés dans un démodulateur de fréquence 30 dont les signaux de sortie sont des séquences d'impulsions qui sont semblables à celles appliquées au modulateur 8, mais qui résultent de l'application d'une transposition binaire différente. Aussi, pour "retrouver" les signaux binaires utiles, ces séquences d'impulsions sont appliquées à une entrée d'un circuit de transposition binaire inverse 32 ou circuit de "désétalement", dont l'autre entrée reçoit les séquences de codage d'un deuxième type correspondent à celles appliquées aux signaux utiles à l'entrée de l'émetteur éloigné dont on reçoit les signaux.

Un tel émetteur/récepteur selon le schéma de la figure 1 comprend un premier oscillateur 14 à fréquence variable élevée, aux alentours de 60 Ghz par exemple, pour l'émetteur et, un deuxième oscillateur 24 à fréquence fixe élevée également, environ 60 Ghz, pour le récepteur.

Un tel oscillateur à fréquence fixe est un élément coûteux parmi les éléments constituant un émetteur/récepteur de ce type.

Aussi, le but de la présente invention est un émetteur/récepteur à étalement de spectre par transposition codée en fréquence et à modulation de phase continue dans lequel le récepteur ne comprend pas d'oscillateur à fréquence fixe.

A cet effet, l'invention réside dans le fait que le signal à fréquence fixe fourni par l'oscillateur du récepteur est remplacé par une partie du signal émis étalé en spectre, c'est-à-dire une fraction du signal fourni par l'oscillateur à fréquence variable.

De manière plus précise, l'invention concerne un émetteur/récepteur de signaux à étalement de spectre par multiplexage en transposition codée en fréquence et à modulation de phase continue comprenant :

- un émetteur comprenant un circuit de transposition ou d'étalement des signaux utiles binaires selon des séquences binaires d'un premier type, un modulateur de fréquence à modulation de phase continue commandé par les signaux utiles binaires transposés et fournissant des signaux d'émission à deux fréquences d'émission ;
- une antenne bi-directionnelle pour transmettre les signaux d'émission et pour recevoir les signaux émis par un émetteur éloigné dans lequel les signaux utiles binaires sont transposés selon des séquences binaires d'un deuxième type ;
- un récepteur comprenant un circuit mélangeur de fréquence qui fournit après filtrage des signaux à fréquence intermédiaire, un amplificateur des signaux à fréquence intermédiaire, un démodulateur de fréquence des signaux à fréquence intermédiaire qui fournit des séquences binaires transposées des signaux reçus et, un circuit de transposition inverse ou de désétalement des signaux binaires transposés reçus selon les séquences binaires du deuxième type ;
- caractérisé en ce qu'il comprend, en outre, un circuit de dérivation d'une partie des signaux d'émission fournis par le modulateur de fréquence de l'émetteur, lesdits signaux dérivés étant appliqués au circuit mélangeur de fréquence et,
- un circuit de démodulation numérique qui reçoit les signaux de sortie du circuit de transposition inverse ou de désétalement et qui fournit les signaux binaires utiles correspondant aux signaux reçus de l'émetteur éloigné tels que transposés selon les séquences binaires du deuxième type.

La mise en oeuvre de ce circuit de dérivation et de ce circuit de démodulation numérique, qui sont des éléments peu coûteux, permet de supprimer un oscillateur à fréquence fixe qui est un élément coûteux.

D'autres caractéristiques et avantages de la présente invention apparaîtront à la lecture de la description suivante d'un exemple particulier de réalisation, ladite description étant faite en relation avec le dessin joint dans lequel :

- la figure 1 est un schéma simplifié d'un émetteur/récepteur de l'art antérieur auquel s'applique l'invention, et
- la figure 2 est un schéma, également simplifié, d'un émetteur/récepteur à étalement de spectre et à modulation de phase continue mettant en oeuvre l'invention.

La figure 1, qui correspond à l'art antérieur, a été décrite succinctement dans le préambule. Sur le schéma de la figure 2, les éléments identiques à ceux du schéma de la figure 1, portent les mêmes références. C'est ainsi que l'émetteur selon l'invention comprend un circuit de transposition ou d'étalement 10 des signaux utiles binaires par des séquences binaires d'un premier type fournis par un générateur 12 et un circuit modulateur de fréquence 8 sous la forme d'un oscillateur 14 à commande de tension qui oscille suivant deux fréquences f1 et f2 selon une variation de phase continue.

Dans l'émetteur, l'invention consiste à mettre en oeuvre un circuit de dérivation 40 qui, disposé à la sortie du circuit modulateur de fréquence, prélève une faible partie des signaux radio-fréquence à émettre. Le signal ainsi dérivé est, selon l'invention, appliqué au circuit mélangeur de fréquence 26, pour servir de signal de référence à la place du signal de sortie de l'oscillateur fixe 24 utilisé dans l'émetteur/récepteur du schéma de la figure 1.

Le récepteur est adapté à recevoir les signaux reçus d'un autre émetteur éloigné, non représenté, dans lequel les signaux utiles binaires sont transposés ou étalés selon des séquences binaires d'un deuxième type différentes de celles du premier type appliquées au circuit de transposition 10.

Les signaux reçus par l'antenne 16 sont, après filtrage dans le filtre 22, appliqués au circuit mélangeur 26 qui reçoit, par ailleurs, une partie du signal émis provenant du circuit de dérivation 40. Les signaux de sortie du circuit mélangeur 26 sont, comme dans l'art antérieur, appliqués après filtrage à un amplificateur à fréquence intermédiaire 28, puis à un circuit démodulateur de fréquence 30 à variation de phase continue. Les signaux de sortie du démodulateur de fréquence 30 contiennent à la fois les signaux émis tels que transposés ou étalés selon les séquences du premier type et les signaux reçus tels que transposés ou étalés selon les séquences du deuxième type correspondant à l'émetteur dont on reçoit les signaux émis.

Ces signaux composites sont appliqués à un circuit de transposition inverse ou de désétalement 32 qui reçoit par ailleurs d'un générateur 34 les séquences binaires correspondant à celles du deuxième type de l'émetteur éloigné. Il en résulte qu'à la sortie du circuit 32, les signaux qui apparaissent contiennent le signal reçu désétalé ainsi que le signal émis étalé. La discrimination entre les deux s'effectue grâce à un circuit 42 qui réalise une démodulation numérique.

Un tel démodulateur numérique est par exemple décrit dans le livre intitulé "DIGITAL COMMUNICATIONS" de John G. PROAKIS édité en 1983 par McGRAW-HILL INTERNATIONAL BOOK COMPANY (pages 178 à 181).

Le fonctionnement de l'émetteur/récepteur selon l'invention sera maintenant expliqué en utilisant une formulation mathématique dans laquelle

$$s(t) = d_e(t) \times C_e(t)$$

définit le signal de sortie du circuit d'étalement 10 qui réalise la transposition du signal binaire utile $d_e(t)$ par un codage pseudo-aléatoire du premier type $C_e(t)$. Le modulateur de fréquence 8 fournit un signal

$$X_e(t) = \cos(w_e t + k\Phi_e(t))$$

avec

$$\frac{d\Phi_e}{dt} = s(t) \quad et \quad \Phi_e(t) = \int_0^t s(z)\, d(z)$$

et $w = 2\pi f$ la pulsation à la fréquence f.

De manière semblable, le signal reçu du récepteur éloigné est défini par :

$$X_r(t) = \cos(w_r t + k'\Phi_r(t))$$

avec

$$\frac{d\Phi_e}{dt} = u(t) \text{ et } \Phi_e(t) = \int_0^t u(z) \, d(z)$$

et $u(t) = d_r(t) + C_r(t)$, le signal de sortie du circuit d'étalement de l'émetteur éloigné qui réalise la transposition du signal binaire utile $d_r(t)$ par un codage pseudo-aléatoire du deuxième type $C_r(t)$.

Les fonctions u, s, $d_r$, $d_e$, $C_r$ et $C_e$ ont les valeurs ± 1.

Dans le récepteur, le mélangeur 26 réalise le produit $X_e(t)$ . $X_r(t)$ pour fournir un signal de sortie r(t) tel que :

$$r(t) = \cos(w_e t + k\Phi_e(t)) \cdot \cos(w_r t + k'\Phi_r(t))$$

en faisant abstraction du bruit additif.

Ce signal r(t) comprend deux composantes principales qui sont centrées sur $(w_e + w_r)$ et $|w_e - w_r|$. La composante $|w_e - w_r|$ est sélectionnée par filtrage dans le circuit 28 pour obtenir un signal r'(t) qui est proportionnel à la différence des arguments de $X_e(t)$ et $X_r(t)$ tel que :

$$r'(t) = \cos[(w_e - w_r)t + k\Phi_e(t) - k'\Phi_r(t)].$$

Le signal r'(t) est démodulé en fréquence par le circuit démodulateur 30 qui est centré autour $(w_e - w_r)$ et qui délivre un signal r"(t) proportionnel à la dérivée de la phase tel que :

$$r''(t) = \frac{d}{dt}[k\Phi_e(t) - k'\Phi_r(t)]$$
$$= k\frac{d\Phi_e}{dt} - k'\frac{d\Phi_r}{dt} = ks(t) - k'u(t)$$

Le signal r"(t) est donc, au bruit additif près, constitué de la somme de deux signaux à spectres étalés. Le circuit de transposition ou de désétalement 32 effectue la multiplication de r"(t) par $C_r(t)$ fournie par le circuit 34 telle que :

$$r''(t) \times C_r(t) = ks(t) \cdot C_r(t) - k'u(t) \cdot C_r(t)$$
$$= ks(t)C_r(t) - k'd_r(t)$$

Le signal de sortie du circuit de désétalement 32 comprend une première composante $ks(t)C_r(t)$ à spectre étalé et donc à faible énergie dans la bande passante de la deuxième composante $k'd_r(t)$, ce qui permet de discriminer cette deuxième composante par filtrage et démodulation dans le circuit 42.

Il est à remarquer que la séparation des deux composantes ne peut être réalisée correctement que si les codes d'étalement $C_r(t)$ et $C_e(t)$ sont orthogonaux, c'est-à-dire à faible corrélation.

## Revendications

1.  Emetteur/récepteur de signaux à étalement de spectre par multiplexage en transposition codée en fréquence et à modulation de phase continue comprenant :

    -   un émetteur comprenant un circuit de transposition ou d'étalement (10) des signaux utiles binaires selon des séquences binaires d'un premier type, un modulateur de fréquence (8) à modulation de phase continue commandé par les signaux utiles binaires transposés et fournissant des signaux d'émission à deux fréquences d'émission ;
    -   une antenne bi-directionnelle (16, 18, 22) pour transmettre les signaux d'émission et pour recevoir les signaux émis par un émetteur éloigné dans lequel les signaux utiles binaires sont transposés selon des séquences binaires d'un deuxième type ; et
    -   un récepteur comprenant un circuit mélangeur de fréquence (26) qui fournit après filtrage des signaux a fréquence intermédiaire, un amplificateur (28) des signaux à fréquence intermédiaire, un démodulateur de fréquence (30) des signaux à fréquence intermédiaire qui fournit des séquences binaires transposées des signaux reçus et, un circuit de transposition inverse ou de désétalement (32) des signaux binaires transposés reçus selon les séquences binaires du deuxième type, caractérisé en ce qu'il comprend, en outre,

- un circuit de dérivation (40) d'une partie des signaux d'émission fournis par le modulateur de fréquence (8) de l'émetteur, lesdits signaux dérivés étant appliqués au circuit mélangeur de fréquence (26) et,
- un circuit de démodulation numérique (42) qui reçoit les signaux de sortie du circuit de transposition inverse et qui fournit les signaux binaires utiles correspondant aux signaux reçus de l'émetteur éloigné tels que transposés selon les séquences binaires du deuxième type.

FIG.1

FIG.2

Office européen
des brevets

**RAPPORT DE RECHERCHE EUROPEENNE**

Numéro de la demande

EP 98 40 1905

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 5 235 616 A (SEBILET BRUNO R) 10 août 1993 * abrégé * * colonne 1, ligne 40 – colonne 2, ligne 40 * * colonne 3, ligne 3 – ligne 32; figure 1 * * colonne 3, ligne 65 – colonne 4, ligne 32 * * colonne 4, ligne 55 – colonne 5, ligne 65; figures 3,4 * | 1 | H04B1/707 |
| Y | EP 0 484 065 A (AMERICAN TELEPHONE & TELEGRAPH) 6 mai 1992 * abrégé * * page 4, ligne 9 – ligne 32; figure 3 * | 1 | |

**DOMAINES TECHNIQUES RECHERCHES (Int.Cl.6)**

H04B

Le présent rapport a été établi pour toutes les revendications

| Lieu de la recherche | Date d'achèvement de la recherche | Examinateur |
|---|---|---|
| LA HAYE | 11 novembre 1998 | Bossen, M |